# EUROPEAN PATENT SPECIFICATION

(11) **EP 3 543 072 B1**
(45) Date of publication and mention of the grant of the patent: **06.10.2021**
(21) Application number: 17871258.4
(22) Date of filing: 15.11.2017
(51) Int. Cl.: H04L 12/40, B65F 3/14

(54) **BUS-BASED GARBAGE TRUCK CONTROL SYSTEM**
BUS-BASIERTES STEUERUNGSSYSTEM FÜR EIN MÜLLSAMMELFAHRZEUG
SYSTÈME DE COMMANDE DE CAMION À ORDURES À BASE DE BUS

(30) Priority: 18.11.2016 CN 201611014446
(43) Date of publication of application: 25.09.2019
(73) Proprietor: Jiangsu Yueda Special Vehicle Co. Ltd., Yancheng, Jiangsu 224007 (CN)
(72) Inventor: CHEN, Jun, Yancheng Jiangsu 224007 (CN); WANG, Dicheng, Yancheng Jiangsu 224007 (CN); SUN, Hongliang, Yancheng Jiangsu 224007 (CN)
(74) Representative: Wang, Bo
(86) International application number: PCT/CN2017/111091
(87) International publication number: WO 2018/090927

(56) References cited:
- EP-A1- 1 944 250
- WO-A1-2018/090927
- CN-A- 101 551 653
- CN-A- 106 553 602
- CN-B- 103 964 108
- CN-U- 202 735 825
- CN-U- 202 735 825
- CN-U- 204 086 889
- CN-U- 204 086 889
- CN-U- 205 405 191
- CN-U- 205 405 191
- CN-U- 206 336 237
- CN-U- 206 336 237
- CN-U- 207 209 109

## Description

### TECHNOLOGY FIELD

The invention relates to a garbage truck control system, particularly to a bus-based garbage truck control system.

### BACKGROUND

The present existing garbage truck is generally controlled by a PLC.

As compare with the traditional PLC, the CAN bus has following advantages:
1) The CAN controller works in a multi-master station mode, each node in the network can compete for transmitting data to bus using the bit-wise arbitration of the lossless structure according to the bus access priority (depending on the identifier of the message).
2) In the CAN protocol, the method of the traditional station address coding is abandoned, and the substitutional method is communication data coding, which has the advantages that the number of nodes in the network is limitless theoretically, and the operation of the system is not affected by adding or eliminating device. Meanwhile, same data can be received in different nodes simultaneously, the above functions bring strong real-time performance of data communication between all nodes of a network formed by the CAN bus, and a redundant structure is easily formed, the reliability and the flexibility of the system are improved.
3) The CAN bus is connected with the physical bus through two output ends CANH and CANL of the CAN controller interface chip, the state of the CANH end can only be in a high level or a floating state, and the CANL end can only be in a low level or a floating state. In this way, it is guaranteed that the phenomenon, similar to one in the RS-485 network, can be avoided, in which some nodes get damages in that the bus is shortcircuited, which is caused by transmitting data from multiple nodes to the bus simultaneously due to system error. In addition, the CAN node can automatically close output function under the condition that the error is serious, so that the operation of other nodes on the bus is not affected, so that it is impossible that the bus is in a "deadlock" state since some individual nodes have problems in the network.
4) The complete communication protocol of the CAN can be realized by a CAN controller chip and an interface chip of the CAN controller chip, so that the difficulty of the development of the user system is greatly reduced, and the development period is shortened.
5) Compared with other field buses, the maximum communication rate of the CAN can reach 1 MBps, the transmission distance can reach 10 kilograms using the twisted pair wire when the transmitting speed is 5KBps, and the reliability of data transmission is high; the CAN bus has already been a sort of field bus with international specification, which has many advantages of high communication speed, easy realizability, high cost performance and the like.
6) The circuit structure is simple, the required number of lines is small, all the control units can share all information and resources through a CAN bus when only two wires are interconnected with external devices.

At present, the PLC control mode, all having distributed control, is employed in the garbage truck, whereas the CAN bus mode is employed in the chassis, so that communication between them cannot be achieved, the real-time parameters of the engine cannot be obtained, the real-time response cannot be directly carried out, the circuit arrangement is complex, and the fault is high.

CN 204086889 U discloses an electronic-controlled device for a sweeper. Said electronic-controlled device comprises a controller, a display screen, a CAN control panel, a camera, a sensor, a device and an operating valve group. The controller, display screen and CAN control panel are connected by CAN.

CN 202735825 U relates to an electronic-controlled system for a retractable garbage truck. The electronic-controlled system comprises a body controller unit, a cab control switch input unit, a sensor signal input unit, a filler operation signal input unit, an actuator solenoid-valve drive unit and a power input unit.

CN 205405191 U discloses a controller for a compression type garbage truck. Said controller comprises an analog signal acquisition input circuit, an analog signal output circuit, a CPU core modular circuit, a digital signal acquisition input circuit, a drive output circuit, a power module circuit and a CAN transceiver module circuit.

CN 103964108 B relates to a control system for a compression type garbage truck, as well as a method for disposing garbage using the control system. A hydraulic control system comprises push pedal solenoid valve, slide plate solenoid valve, scraper plate solenoid valve, lifting solenoid valve and carrying solenoid valve.

CN 207209109 U discloses a distributed electronic-controlled system for a rear-mounted compression type garbage truck.

### Technical problem(s)

The technical problem to be solved by the invention is to overcome the defects in the background art, provide a bus-based garbage truck control system.

### SUMMARY

A bus-based garbage truck control system comprises a cab CAN controller, a touch screen, a valve block CAN (controller area network) controller, a first to third CAN buses, a button operation box, a rear part operating panel, a sensing switch module, a pressure sensor and a hydraulic solenoid valve module;
wherein the cab CAN controller, the button operation box, and the touchscreen are all disposed in the cab of the garbage truck, and the cab CAN controller is directly connected with the button operation box;
the valve block CAN controller, the sensing switch module, the pressure sensor, the hydraulic solenoid valve module and the rear part operating panel are all disposed outside the cab of the garbage truck, the valve block CAN controller is directly connected with the sensing switch module, the pressure sensor, the hydraulic solenoid valve module and the rear part operating panel respectively;
CAN communication between the cab CAN controller and the valve block CAN controller is carried out via the first CAN bus;
CAN communication between the cab CAN controller and an engine ECU of the garbage truck is carried out via the second CAN bus;
CAN communication between the cab CAN controller and the touchscreen is carried out via the third CAN bus;
the first CAN bus and the third CAN bus communicate on the basis of the CANopen protocol, the second CAN bus communicate on the basis of the J1939 protocol;
the button operation box comprises a power indicating lamp, a latch indicating lamp, a main control switch loading button, a main control switch discharging button, a charger rising button, a charger descending button, a discharging plate push-out button, a discharging plate returning button and the cleaning button are used for indicating the states of the power source and the latch, and for sending a discharging operation instruction to the cab CAN controller by a cab operator;
the sensing switch module is used for sensing the position states of the upper scraper, the lower scraper and the charger, for sensing whether the latch oil cylinder is open, for sensing pressure values of the hydraulic systems of the garbage truck;
the hydraulic solenoid valve module comprises a first to fifth hydraulic solenoid joint valves, wherein the first solenoid joint valve comprises a lower scraper reversing solenoid valve and a lower scraper inwards-scraping solenoid valve, is arranged into the first set on a front door plate of the garbage bin body of the garbage truck, is used for controlling the action of an oil cylinder of the lower scraper;
the second solenoid joint valve comprises an upper scraper descending solenoid valve and an upper scraper ascending solenoid valve, is arranged in the second set on the front door plate of the garbage bin body of the garbage truck, is used for controlling the action of an oil cylinder of the upper scraper;
the third solenoid joint valve comprises a discharging plate solenoid valve and a discharging plate returning solenoid valve, is arranged in the third set on a front door plate of the garbage bin body of the garbage truck, is used for controlling the action of an oil cylinder of the discharging plate;
the fourth solenoid joint valve comprises a charger descending solenoid valve, is arranged in the fourth set on the front door plate of the garbage bin body of the garbage truck, is used for controlling the action of an lifting oil cylinder of the charger;
the fifth solenoid joint valve comprises a latch locking solenoid valve and a latch opening solenoid valve, is arranged in the fifth set on the front door plate of the garbage bin body of the garbage truck, is used for controlling the action of an oil cylinder of the latch;
the rear part operating panel is arranged at the tail part of the charger, comprises a loading switch and an emergency stop switch which are respectively used for sending a loading operation instruction and an emergency stop instruction to the valve block CAN controller by the rear operator;
the valve block CAN controller is used for transmitting sensing data of the sensing switch module and the pressure sensor to the cab CAN controller via the first CAN bus, and controls the operation of the hydraulic solenoid valve module according to the control instruction of the cab CAN controller or the rear part operating panel;
the cab CAN controller is used for controlling the operation of the power indicating lamp and the latch indicating lamp of the button operation box according to sensing data of the sensing switch module, transmitting the control instruction to the valve block CAN controller according to the input data of the button operation box, and controlling the touch screen to give an alarm when sensing data of the sensing gateway module and the pressure sensor is lost.

The invention provides a further optimizational solution for the bus-based garbage truck control system, wherein the sensing switch module comprises an upper limit sensing switch, a reversing ending sensing switch, an inwards-scraping ending sensing switch, a lower limit sensing switch, a T/G descending confirmation switch and a safety confirmation switch; the upper limit sensing switch, the reversing-end sensing switch, the scraping-end sensing switch, the lower limit sensing switch, the T/G descending confirmation switch and the safety confirmation switch connect with the valve block CAN controller directly;
the upper limit sensing switch is arranged at the end position of the rising ending of the upper scraper, is used for sensing whether the rising of the upper scraper ends or not, which is transmitted to the valve block CAN controller by the upper limit sensing switch;
the reversing ending sensing switch is arranged at the end position of the reversing ending of the lower scraper, is used for sensing whether the reversal of the lower scraper ends or not, which is transmitted to the valve block CAN controller by the reversing ending sensing switch;
the inwards-scraping ending sensing switch is arranged at the end position of the inwards-scraping ending of the lower scraper, is used for sensing whether the inwards-scraping of the lower scraper ends or not, which is transmitted to the valve block CAN controller by the inwards-scraping ending sensing switch;
the lower limit sensing switch is arranged at the end position of the descending ending of the upper scraper, is used for sensing whether the descending of the upper scraper ends or not, which is transmitted to the valve block CAN controller by the lower limit sensing switch;
the T/G descending confirmation switch is arranged at the rotary shaft joint between the garbage bin body of the garbage truck and the charger, is used for sensing whether the descending of the charger ends or not, which is transmitted to the valve block CAN controller by the T/G descending confirmation switch;
the safety confirmation switch is arranged at the position where the latch oil cylinder is open, is used for sensing whether the latch is open or not, which is transmitted to the valve block CAN controller by the safety confirmation switch;
the pressure sensor is installed on a hydraulic system pipeline of the garbage truck, is used for monitoring the pressure value of the hydraulic system in real time, and transmitting the pressure value to the valve block CAN controller.

The invention provides a further optimizational solution for the bus-based garbage truck control system, wherein the cab CAN controller adopts the SSCAL 610 chip, the 10.0 is connected with the main control switch button, the 10.1 is connected with the main control discharging switch button, 10.2 is connected with the charger rising button, the 10.3 is connected with the charger descending button, and the 10.4 is connected with the discharging plate pushing-out button, 10.5 is connected with the discharge plate returning button, the 10.6 is connected with the cleaning button, and the o0.1 is connected with the latch releasing indicating lamp.

The invention provides a further optimizational solution for the bus-based garbage truck control system, wherein the valve block CAN controller adopts the SSCA 2020 chip, the I1.0 is connected with the safety confirmation sensing switch, the I1.1 is connected with the T/G descending confirmation sensing switch, the 11.2 is connected with the upper limit sensing switch, the 11.3 is connected with the lower limit sensing switch, the 11.4 is connected with the inwards-scraping ending sensing switch, the 11.5 is connected with the reversing ending sensing switch, and the 11.6 is connected with the emergency stop switch, the 11.7 is connected with the loading switch, and the O1.0 is connected with the lower scraper reversing solenoid valve, the O1.1 is connected with the upper scraper descending solenoid valve, the 01.2 is connected with the lower scraper inwards-scraping solenoid valve, and the 01.3 is connected with the upper scraper rising solenoid valve, the 01.4 is connected with the charger descending solenoid valve, and the 01.5 is connected with the discharging plate solenoid valve, the 01.6 is connected with the discharging plate returning solenoid valve, the 01.7 is connected with the latch locking solenoid valve, and the 01.8 is connected with the latch opening solenoid valve.

### BENEFITS

According to the invention, the logic control of the whole vehicle system is realized by utilizing the bus controller, compared with a traditional relay circuit, the following technical effects are achieved:
1. Wire bundles of the entire truck are simplified. The signal transmitted on the bus can be shared by a plurality of equipment systems, so that the overall efficiency of the system is improved to the largest extent, the number of wires on the automobile is reduced, the wire diameter of the wire bundles is reduced, and the wire bundles of the entire truck are greatly simplified.
2. The reliability, safeness of the electrical wirings of the entire truck are increased. With the design of the photoelectric isolation on the input and the output short-circuit protection on the output, the reliability of the system is higher.
3. The reparability is increased. The system has a diagnostic function and can warn in time, and the faults of the electrical system can be visually displayed if there is a monitor, which facilitates the drivers and the maintainers to maintain the electrical system and to check and repair faults.
4. The data is shared. The signal collected on any control unit can be used by other control units on the whole local area network. The system, connected with other control systems on the vehicle (such as ABS, EDC, ECU), shares data of the whole vehicle, so that the whole vehicle becomes an intelligent whole. When the system is in a sleep state, the whole system is in the lowest power consumption state, so that the energy consumption is reduced; once the signals of door opening and engine igniting are received, the whole system is immediately activated, to receive the information transmitted by all nodes, so that the system is adjusted to a working state.
5. The configuration is flexible. The system is an intelligent opening system of a building block type, the number of the control units can be increased and reduced according to different loads. The function of each load is determined and realized through software programming. Different configuration requirements can be satisfied at will.
6. The size is small, and the protection degree is high. The control system is a high integrative level controller, which is very small in size and can be smoothly installed and placed in a narrow vehicle interior space. The full-metal aluminum casting shell and the AMP plug-in component can improve the protective degree of controller to reach IP67, and can provide dustproof, waterproof and shockproof. Moreover, the working temperature range is wide: -40°C- +70 °C.

### BRIEF DESCRIPTION OF THE DRAWINGS

FIG. 1 is a structural schematic diagram of the invention;
FIG. 2 is a distribution schematic diagram of a control bus according to the invention;
FIG. 3 is a structural schematic diagram of a button operation box according to the invention;
FIG. 4 is a connection schematic diagram of a cab CAN controller according to the invention;
FIG. 5 is a connection schematic diagram of a valve block CAN controller according to the invention;
FIG. 6 is a schematic diagram of heartbeat detecting pulse among a cab CAN controller, a valve block CAN controller and a touchscreen device according to the invention;
FIG. 7 is a schematic diagram of an automatic garbage loading system.

In the figure, 1-a T/G descending confirmation switch, 2-a upper limit sensing switch, 3-a reversing end sensing switch, 4-an inwards-scraping end sensing switch, 5-a lower limit sensing switch, 6-a rear part operation panel, 7-a safety confirmation switch, 8-a pressure sensor and 9-a hydraulic solenoid valve module, 11-a button operation box, 12-a touchscreen and 13-a cab CAN controller.

### DETAILED DESCRIPTION OF THE EMBODIMENTS

The technical solution of the present invention is described below in further detail with reference to the accompanying drawings.

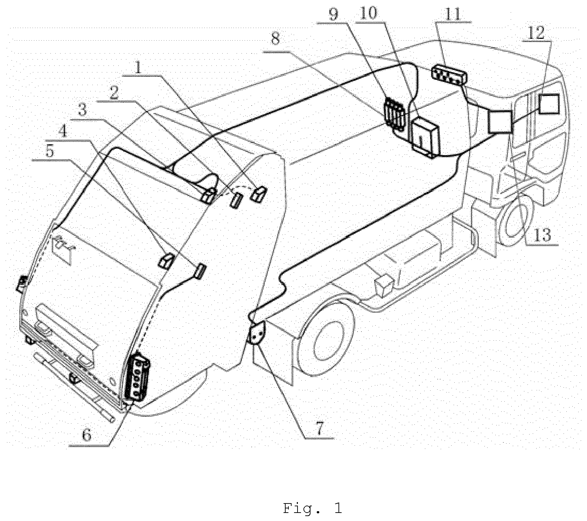

As shown in FIG. 1, the invention discloses a bus-based garbage truck control system, comprising a cab CAN controller, a touch screen, a valve block CAN (controller area network) controller, a first to third CAN buses, a button operation box, a rear part operating panel, a sensing switch module, a pressure sensor and a hydraulic solenoid valve module.

The cab CAN controller, the button operation box, and the touchscreen are all disposed in the cab of the garbage truck, and the cab CAN controller is directly connected with the button operation box.

The valve block CAN controller, the sensing switch module, the pressure sensor, the hydraulic solenoid valve module and the rear part operating panel are all disposed outside the cab of the garbage truck, the valve block CAN controller is directly connected with the sensing switch module, the pressure sensor, the hydraulic solenoid valve module and the rear part operating panel respectively.

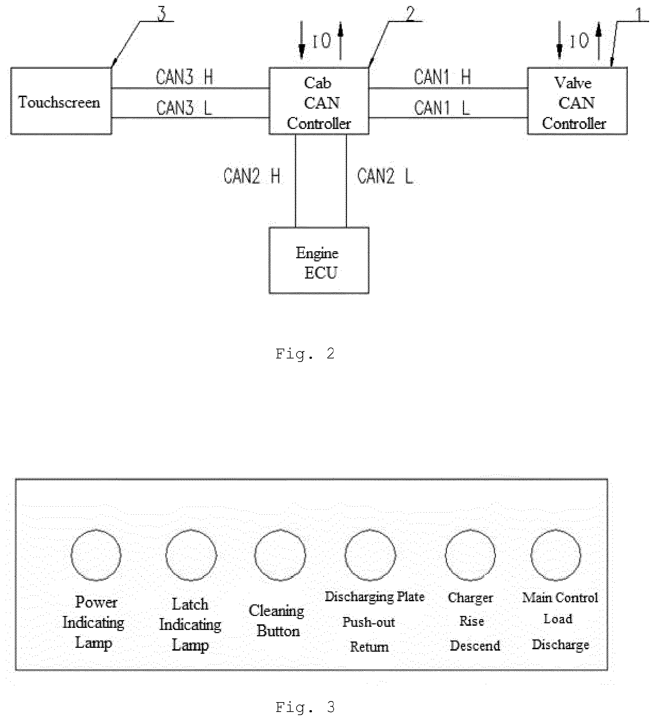

As shown in FIG. 2, CAN communication between the cab CAN controller and the valve block CAN controller is carried out via the first CAN bus.

CAN communication between the cab CAN controller and an engine ECU of the garbage truck is carried out via the second CAN bus.

CAN communication between the cab CAN controller and the touchscreen is carried out via the third CAN bus.

The first CAN bus and the third CAN bus communicate on the basis of the CANopen protocol, the second CAN bus communicate on the basis of the J1939 protocol.

As shown in FIG. 3, the button operation box comprises a power indicating lamp, a latch indicating lamp, a main control switch loading button, a main control switch discharging button, a charger rising button, a charger descending button, a discharging plate push-out button, a discharging plate returning button and the cleaning button are used for indicating the states of the power source and the latch, and for sending a discharging operation instruction to the cab CAN controller by a cab operator.

The sensing switch module comprises an upper limit sensing switch, a reversing ending sensing switch, an inwards-scraping ending sensing switch, a lower limit sensing switch, a T/G descending confirmation switch and a safety confirmation switch; the upper limit sensing switch, the reversing-end sensing switch, the scraping-end sensing switch, the lower limit sensing switch, the T/G descending confirmation switch and the safety confirmation switch connect with the valve block CAN controller directly, wherein;
the upper limit sensing switch is arranged at the end position of the rising ending of the upper scraper, is used for sensing whether the rising of the upper scraper ends or not, which is transmitted to the valve block CAN controller by the upper limit sensing switch;
the reversing ending sensing switch is arranged at the end position of the reversing ending of the lower scraper, is used for sensing whether the reversal of the lower scraper ends or not, which is transmitted to the valve block CAN controller by the reversing ending sensing switch;
the inwards-scraping ending sensing switch is arranged at the end position of the inwards-scraping ending of the lower scraper, is used for sensing whether the inwards-scraping of the lower scraper ends or not, which is transmitted to the valve block CAN controller by the inwards-scraping ending sensing switch;
the lower limit sensing switch is arranged at the end position of the descending ending of the upper scraper, is used for sensing whether the descending of the upper scraper ends or not, which is transmitted to the valve block CAN controller by the lower limit sensing switch;
the T/G descending confirmation switch is arranged at the rotary shaft joint between the garbage bin body of the garbage truck and the charger, is used for sensing whether the descending of the charger ends or not, which is transmitted to the valve block CAN controller by the T/G descending confirmation switch;
the safety confirmation switch is arranged at the position where the latch oil cylinder is open, is used for sensing whether the latch is open or not, which is transmitted to the valve block CAN controller by the safety confirmation switch;
the pressure sensor is installed on a hydraulic system pipeline of the garbage truck, is used for monitoring the pressure value of the hydraulic system in real time, and transmitting the pressure value to the valve block CAN controller.

The hydraulic solenoid valve module comprises a first to fifth hydraulic solenoid joint valves, wherein;
the first solenoid joint valve comprises a lower scraper reversing solenoid valve and a lower scraper inwards-scraping solenoid valve, is arranged into the first set on a front door plate of the garbage bin body of the garbage truck, is used for controlling the action of an oil cylinder of the lower scraper;
the second solenoid joint valve comprises an upper scraper descending solenoid valve and an upper scraper ascending solenoid valve, is arranged in the second set on the front door plate of the garbage bin body of the garbage truck, is used for controlling the action of an oil cylinder of the upper scraper;
the third solenoid joint valve comprises a discharging plate solenoid valve and a discharging plate returning solenoid valve, is arranged in the third set on a front door plate of the garbage bin body of the garbage truck, is used for controlling the action of an oil cylinder of the discharging plate;
the fourth solenoid joint valve comprises a charger descending solenoid valve, is arranged in the fourth set on the front door plate of the garbage bin body of the garbage truck, is used for controlling the action of an lifting oil cylinder of the charger;
the fifth solenoid joint valve comprises a latch locking solenoid valve and a latch opening solenoid valve, is arranged in the fifth set on the front door plate of the garbage bin body of the garbage truck, is used for controlling the action of an oil cylinder of the latch.

The rear part operating panel is arranged at the tail part of the charger, comprises a loading switch and an emergency stop switch which are respectively used for sending a loading operation instruction and an emergency stop instruction to the valve block CAN controller by the rear operator.

The valve block CAN controller is used for transmitting sensing data of the sensing switch module and the pressure sensor to the cab CAN controller via the first CAN bus, and controls the operation of the hydraulic solenoid valve module according to the control instruction of the cab CAN controller or the rear part operating panel.

The cab CAN controller is used for controlling the operation of the power indicating lamp and the latch indicating lamp of the button operation box according to sensing data of the sensing switch module, transmitting the control instruction to the valve block CAN controller according to the input data of the button operation box, and controlling the touch screen to give an alarm when sensing data of the sensing gateway module and the pressure sensor is lost.

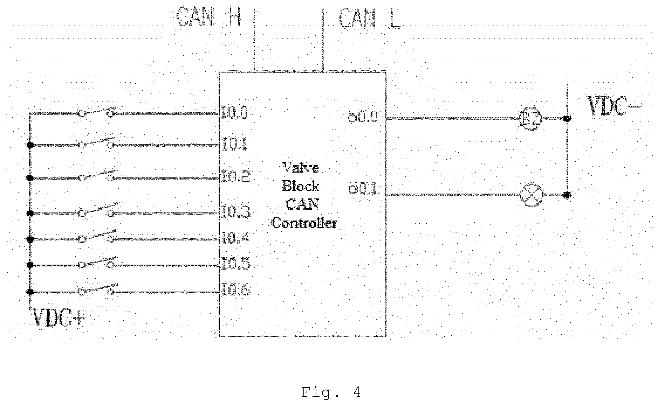

As shown in FIG. 4, the cab CAN controller adopts the SSCAL 610 chip, the 10.0 is connected with the main control switch button, the 10.1 is connected with the main control discharging switch button, 10.2 is connected with the charger rising button, the 10.3 is connected with the charger descending button, and the 10.4 is connected with the discharging plate pushing-out button, 10.5 is connected with the discharge plate returning button, the 10.6 is connected with the cleaning button, and the o0.1 is connected with the latch releasing indicating lamp.

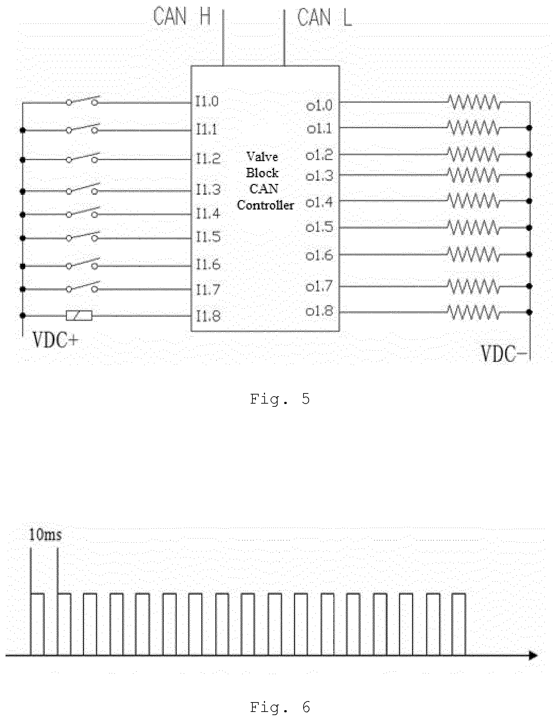

As shown in FIG. 5, the valve block CAN controller adopts the SSCA 2020 chip, the I1.0 is connected with the safety confirmation sensing switch, the I1.1 is connected with the T/G descending confirmation sensing switch, the 11.2 is connected with the upper limit sensing switch, the 11.3 is connected with the lower limit sensing switch, the 11.4 is connected with the inwards-scraping ending sensing switch, the 11.5 is connected with the reversing ending sensing switch, and the 11.6 is connected with the emergency stop switch, the 11.7 is connected with the loading switch, and the O1.0 is connected with the lower scraper reversing solenoid valve, the O1.1 is connected with the upper scraper descending solenoid valve, the 01.2 is connected with the lower scraper inwards-scraping solenoid valve, and the 01.3 is connected with the upper scraper rising solenoid valve, the 01.4 is connected with the charger descending solenoid valve, and the 01.5 is connected with the discharging plate solenoid valve, the 01.6 is connected with the discharging plate returning solenoid valve, the 01.7 is connected with the latch locking solenoid valve, and the 01.8 is connected with the latch opening solenoid valve.

According to the invention, the vehicle-mounted storage battery provides a 24V direct-current power supply to the power input end of the system.

A special kind of heartbeat signal detecting technology is employed for the CANopen communication among the cab CAN controller, the valve block CAN controller and the touchscreen, each frame data communicated directly by the controller has a heartbeat signal whose amplitude changes with a frequency of 10ms, and when it is detected that the heartbeat signals do not change for an interval exceeding 5 periods, the bus communication fault is decided, the system automatically alarms and stops, which prevents accidents, and improves the safety and reliability of the system, as shown in FIG. 6, the working process is as follows:

When the power button is powered on, the whole garbage truck control system is provided with electric power, after which the system is initialized, if there is any broken operable button(as the wire bundle or the button has its own problem) for cleaning, pushing out the discharging plate, returning the discharging plate, rising the charger, descending the charger, rising the upper scraper, descending the upper scraper, scraping inwards the lower scraper, reversing the lower scraper, rising the charger, descending the charger, continuous loading, or loading, the system gives an alarm, and the power-off and the power-on must be carried out again after the fault is removed, the system continues to work only after the judgment is correct, when there is no problem, the system enters a working mode for waiting and selecting.

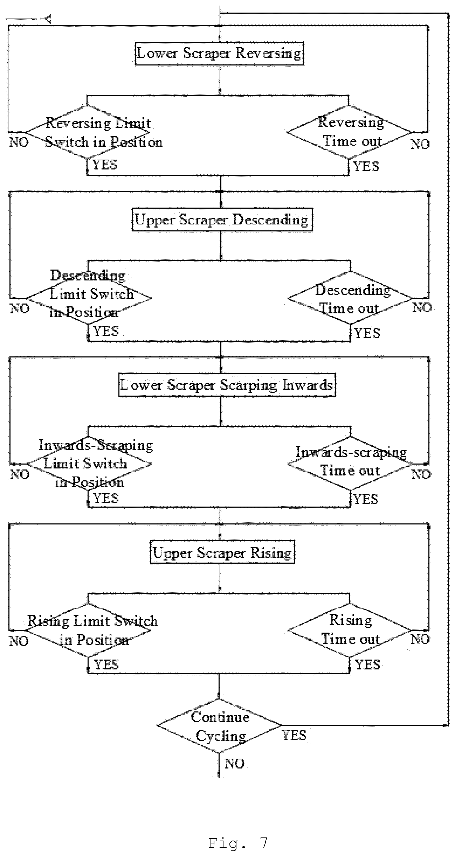

As shown in FIG. 7, the loading operation process is as follows:
Step A.1), the master control switch is switched to a loading state, 10.0 is turned on; the electric signals are transmitted to all the sensing switches.

If any of the safety confirmation switch, the descending confirmation switch, and the emergency stop switch has no output, the loading operation cannot be carried out, and the failing one is displayed on the touchscreen.

Step A.2), the loading switch at the rear part is pressed, 11.7 is turned on, the lower scraper reversing solenoid valve O1.0 acts, the lower scraper begins to reverse, when reversing ending sensing switch is detected as reversing, 11.5 is turned on, the upper scraper descending solenoid valve O1.1 acts, the upper scraper begins to descend, when the lower limit sensing switch is detected as descending, 11.3 is turned on, the lower scraper inwards-scraping solenoid valve 01.2 acts, the lower scraper begins to scrape inwards, when the inwards-scraping ending sensing switch is detected as scraping inwards, 11.4 is turned on, the upper scraper rising solenoid valve 01.3 acts, the upper scraper begins to rise, when the upper limit sensing switch is detected, one cycle action is completed. The judgment process is as shown in FIG. 5. In this process, any fault can be transmitted through CAN bus to the cab touchscreen to display.

Step A.3), in the loading process, when any accidental fault occurs, the emergency stop switch 11.6 can be pressed down, and the whole action is stopped.

The discharging operation process is as follows:
Step B.1), the master control switch is switched to a discharging state in the cab, 10.1 is turned on; the system enters a working mode for discharging and detects every sensing.
Step B.2), the charger rising switch is switched on, 10.2 is turned on, the latch opening solenoid valve 01.8 acts, after fully opening, the charger begins to rise, meanwhile, o0.1 acts, the latch releasing indicating lamp is light on.
Step B.3), the cleaning button is pressed down, 10.6 is turned on, the upper scraper and the lower scraper begin cleaning actions, the order of actions is similar to that of the loading operation.
Step B.4), the pushing plate push-out button is pressed down, 10.4 is turned on, the pushing plate push-out solenoid valve 01.5 acts, the pushing plate pushes forward.
Step B.5), the pushing plate returning button is pressed down, 10.5 is turned on, the pushing plate returning solenoid valve 01.6 acts, the pushing plate returns backwards.
Step B.6), the charger descending switch is switched on, 10.3 is turned on, the charger descending solenoid valve 01.4 acts, the charger begins to descend, when T/G descending confirmation sensing switch is detected as descending, I1.1 is turned on, the latch locking solenoid valve 01.7 acts, the latch is locked.
Step B.7), the whole discharging process is finished.

The method for automatically adjusting the rotating speed of the engine comprises the following steps:
Step C.1), the acceleration process, when the compression vehicle enters a working state, the CAN controller can monitor the pressure change of the hydraulic system in real time through the pressure sensor 11.8. When the vehicle starts to work, the CAN controller can deliver to the ECU of the engine an instruction of rotating speed for controlling the opening size of the pump at the same time, so that the pressure can be achieved when it works normally. During it works normally, if the pressure is suddenly increased, and the increased pressure maintains for 3 seconds, the CAN controller is used for deciding that the load is larger, the rotating speed of the engine is automatically increased in order to avoid pressure locking and engine stop, the opening size of the pump is increased so that a predetermined value can be reached, which can ensure smooth work.
Step C.2), a deceleration process, when the system pressure is reduced, the controller can carry out self-regulation, the rotating speed of the engine is reduced, and the idling state is achieved.

One skilled in the art can understand that, unless otherwise defined, all terms (including technical terms and scientific terms) used herein has the same meaning apprehended by those of ordinary technicians in the field of the invention. It should also be understood that those terms defined in the general dictionary should be considered that have meanings consistent with those in the context of the prior art, and does not need to be interpreted by an idealized or overly formal sense unless defined herein.

The above embodiments, are further detailed descriptions of the purpose, the technical solution and the beneficial effects of the invention, it should be understood that the above descriptions are only specific embodiments of the present invention, not used for explanative limitation of the present invention.

## Claims

1. A bus-based garbage truck control system comprising:
a cab CAN, controller area network, controller (13), a touch screen (12), a valve block CAN controller (10), a first to third CAN buses, a button operation box (11), a rear part operating panel (6), a sensing switch module, a pressure sensor (8) and a hydraulic solenoid valve module;
wherein the cab CAN controller (13), the button operation box (11), and the touchscreen (12) are all disposed in the cab of the garbage truck, and the cab CAN controller (13) is directly connected with the button operation box (11);
the valve block CAN controller (10), the sensing switch module, the pressure sensor (8), the hydraulic solenoid valve module (9) and the rear part operating panel (6) are all disposed outside the cab of the garbage truck, the valve block CAN controller (10) is directly connected with the sensing switch module, the pressure sensor (8), the hydraulic solenoid valve module (9) and the rear part operating panel (6) respectively;
CAN communication between the cab CAN controller (13) and the valve block CAN controller (10) is carried out via the first CAN bus;
CAN communication between the cab CAN controller (13) and an engine ECU of the garbage truck is carried out via the second CAN bus;
CAN communication between the cab CAN controller (13) and the touchscreen (12) is carried out via the third CAN bus;
the first CAN bus and the third CAN bus communicate on the basis of the CANopen protocol, the second CAN bus communicate on the basis of the J1939 protocol;
the button operation box (11) comprises a power indicating lamp, a latch indicating lamp, a main control switch loading button, a main control switch discharging button, a charger rising button, a charger descending button, a discharging plate push-out button, a discharging plate returning button and the cleaning button are used for indicating states of a power source and a latch, and for sending a discharging operation instruction to the cab CAN controller (13) by a cab operator;
the sensing switch module is used for sensing the position states of a upper scraper, a lower scraper and a charger, for sensing whether the latch oil cylinder is open, for sensing pressure values of hydraulic systems of the garbage truck;
the hydraulic solenoid valve module (9) comprises a first to fifth hydraulic solenoid joint valves, wherein the first solenoid joint valve comprises a lower scraper reversing solenoid valve and a lower scraper inwards-scraping solenoid valve, is arranged into a first set on a front door plate of a garbage bin body of the garbage truck, is used for controlling the action of an oil cylinder of the lower scraper;
the second solenoid joint valve comprises an upper scraper descending solenoid valve and an upper scraper ascending solenoid valve, is arranged in a second set on the front door plate of the garbage bin body of the garbage truck, is used for controlling the action of an oil cylinder of the upper scraper;
the third solenoid joint valve comprises a discharging plate solenoid valve and a discharging plate returning solenoid valve, is arranged in a third set on a front door plate of the garbage bin body of the garbage truck, is used for controlling the action of an oil cylinder of the discharging plate;
the fourth solenoid joint valve comprises a charger descending solenoid valve, is arranged in a fourth set on the front door plate of the garbage bin body of the garbage truck, is used for controlling the action of an lifting oil cylinder of the charger;
the fifth solenoid joint valve comprises a latch locking solenoid valve and a latch opening solenoid valve, is arranged in a fifth set on the front door plate of the garbage bin body of the garbage truck, is used for controlling the action of an oil cylinder of the latch;
the rear part operating panel (6) is arranged at the tail part of the charger, comprises a loading switch and an emergency stop switch which are respectively used for sending a loading operation instruction and an emergency stop instruction to the valve block CAN controller (10) by a rear operator;
the valve block CAN controller (10) is used for transmitting sensing data of the sensing switch module and the pressure sensor (8) to the cab CAN controller (13) via the first CAN bus, and controls the operation of the hydraulic solenoid valve module (9) according to the control instruction of the cab CAN controller (13) or the rear part operating panel (6);
the cab CAN controller (13) is used for controlling the operation of the power indicating lamp and the latch indicating lamp of the button operation box (11) according to sensing data of the sensing switch module, transmitting the control instruction to the valve block CAN controller (10) according to the input data of the button operation box (11), and controlling the touch screen (12) to give an alarm when sensing data of a sensing gateway module and the pressure sensor (8) is lost.

2. The bus-based garbage truck control system according to claim 1, **characterized in that**, the sensing switch module comprises an upper limit sensing switch (2), a reversing ending sensing switch (3), an inwards-scraping ending sensing switch (4), a lower limit sensing switch (5), a T/G descending confirmation switch (1) and a safety confirmation switch (7); the upper limit sensing switch (2), the reversing-end sensing switch (3), the scraping-end sensing switch, the lower limit sensing switch (5), the T/G descending confirmation switch (1) and the safety confirmation switch (7) connect with the valve block CAN controller (10) directly;
the upper limit sensing switch (2) is arranged at the end position of the rising ending of the upper scraper, is used for sensing whether the rising of the upper scraper ends or not, which is transmitted to the valve block CAN controller (10) by the upper limit sensing switch (2);
the reversing ending sensing switch (3) is arranged at the end position of the reversing ending of the lower scraper, is used for sensing whether the reversal of the lower scraper ends or not, which is transmitted to the valve block CAN controller (10) by the reversing ending sensing switch (3);
the inwards-scraping ending sensing switch (4) is arranged at the end position of the inwards-scraping ending of the lower scraper, is used for sensing whether the inwards-scraping of the lower scraper ends or not, which is transmitted to the valve block CAN controller (10) by the inwards-scraping ending sensing switch (4);
the lower limit sensing switch (5) is arranged at the end position of the descending ending of the upper scraper, is used for sensing whether the descending of the upper scraper ends or not, which is transmitted to the valve block CAN controller (10) by the lower limit sensing switch (5);
the T/G descending confirmation switch (1) is arranged at the rotary shaft joint between the garbage bin body of the garbage truck and the charger, is used for sensing whether the descending of the charger ends or not, which is transmitted to the valve block CAN controller (10) by the T/G descending confirmation switch (1);
the safety confirmation switch (7) is arranged at the position where the latch oil cylinder is open, is used for sensing whether the latch is open or not, which is transmitted to the valve block CAN controller (10) by the safety confirmation switch (7);
the pressure sensor (8) is installed on a hydraulic system pipeline of the garbage truck, is used for monitoring the pressure value of the hydraulic system in real time, and transmitting the pressure value to the valve block CAN controller (10) .

3. The bus-based garbage truck control system according to claim 2, **characterized in that**, the cab CAN controller (13) adopts a SSCAL 610 chip, a 10.0 is connected with the main control switch button, a 10.1 is connected with the main control discharging switch button, a 10.2 is connected with the charger rising button, a 10.3 is connected with the charger descending button, and a 10.4 is connected with the discharging plate pushing-out button, a 10.5 is connected with the discharge plate returning button, a 10.6 is connected with the cleaning button, and a o0.1 is connected with the latch releasing indicating lamp.

4. The bus-based garbage truck control system according to claim 2, **characterized in that**, the valve block CAN controller (10) adopts a SSCA 2020 chip, a I1.0 is connected with the safety confirmation sensing switch, a I1.1 is connected with the T/G descending confirmation sensing switch, a 11.2 is connected with the upper limit sensing switch (2), a 11.3 is connected with the lower limit sensing switch (5), a 11.4 is connected with the inwards-scraping ending sensing switch (4), a 11.5 is connected with the reversing ending sensing switch (3), and a 11.6 is connected with the emergency stop switch, a I1.7 is connected with the loading switch, and a O1.0 is connected with the lower scraper reversing solenoid valve, a O1.1 is connected with the upper scraper descending solenoid valve, a 01.2 is connected with the lower scraper inwards-scraping solenoid valve, and a 01.3 is connected with the upper scraper rising solenoid valve, a 01.4 is connected with the charger descending solenoid valve, and a 01.5 is connected with the discharging plate solenoid valve, a 01.6 is connected with the discharging plate returning solenoid valve, a 01.7 is connected with the latch locking solenoid valve, and a 01.8 is connected with the latch opening solenoid valve.

## Patentansprüche

1. Das busgestützte Steuerungssystem für Müllfahrzeuge, **dadurch gekennzeichnet, dass** es eine CAN-Steuerung für Fahrerhaus (13), CAN (Controller Area Network), einen Touchscreen (12), eine CAN-Steuerung für Ventilblock (10), einen ersten bis dritten CAN-Bus, eine Bedienbox (11), ein hinteres Bedienfeld (6), ein Induktionsschaltermodul, den Drucksensor (8) und ein Hydraulik-Magnetventilmodul umfasst,
worin die bezeichnete CAN-Steuerung für Fahrerhaus (13), die Bedienbox (11) und der Touchscreen (12) im Fahrerhaus des Müllfahrzeugs angeordnet sind, wobei die bezeichnete CAN-Steuerung für Fahrerhaus (13) und die Bedienbox (11) miteinander direkt verbunden sind;
worin die bezeichnete CAN-Steuerung für Ventilblock (10), das Induktionsschaltermodul, der Drucksensor (8), das Hydraulik-Magnetventilmodul (9) und das hintere Bedienfeld (6) alle außerhalb des Fahrerhauses des Müllfahrzeugs angeordnet sind, wobei die genannte CAN-Steuerung für Ventilblock (10) jeweils mit dem Induktionsschaltermodul, dem Drucksensor (8), dem Hydraulik-Magnetventilmodul (9) bzw. dem hinteren Bedienfeld (6) direkt verbunden ist;
wobei die CAN-Kommunikation zwischen der bezeichneten CAN-Steuerung für Fahrerhaus (13) und der CAN-Steuerung für Ventilblock (10) über den ersten CAN-Bus erfolgt;
wobei die CAN-Kommunikation zwischen der bezeichneten CAN-Steuerung für Fahrerhaus (13) und der elektronischen Steuereinheit (ECU) für den Motor des Müllfahrzeugs über den zweiten CAN-Bus erfolgt;
wobei die CAN-Kommunikation zwischen der bezeichneten CAN-Steuerung für Fahrerhaus (13) und dem Touchscreen (12) über den dritten CAN-Bus erfolgt;
wobei der genannte erste CAN-Bus und dritte CAN-Bus unter Anwendung des CANOpen-Protokolls kommunizieren, und der zweite CAN-Bus unter Anwendung des J1939-Protokolls kommuniziert;
worin die bezeichnete Bedienbox (11) eine Signalleuchte für Stromversorgung, eine Verriegelungshaken-Anzeige, einen Taster Hauptschalter Beladen, einen Taster Hauptschalter Entladen, einen Taster Belader anheben, einen Taster Belader absenken, einen Taster Entladeplatte ausfahren, einen Taster Entladeplatte zurückfahren und einen Taster Entfernen aufnimmt, welche den Status der Stromversorgung und des Verriegelungshakens anzeigen und dem Fahrerhausbediener dazu dienen, Arbeitsanweisungen zum Entladen an die CAN-Steuerung des Fahrerhauses (13) zu senden;
worin das bezeichnete Induktionsschaltermodul dazu dient, den Positionsstatus des oberen Kratzers, des unteren Kratzers und des Beladers zu erfassen, abzutasten, ob der Zylinder des Verriegelungshakens geöffnet ist, und den Druckwert des Hydrauliksystems eines Müllfahrzeugs zu erfassen;
worin das bezeichnete Hydraulik-Magnetventilmodul (9) das erste bis fünfte hydraulische Magnetventil umfasst, wobei:
das bezeichnete erste Magnetventil aus einem Magnetventil für die Umkehrung des unteren Kratzers und einem Magnetventil für die Kratzbewegung des unteren Kratzers besteht, als das erste Ventil am vorderen Türflügel des Müllbehälterkörpers des Müllfahrzeugs angeordnet ist und zur Steuerung der Zylinderbewegung des unteren Kratzers dient,
das bezeichnete zweite Magnetventil aus einem Magnetventil für das Absenken des oberen Kratzers und einem Magnetventil für das Anheben des oberen Kratzers besteht, als das zweite Ventil am vorderen Türflügel des Müllbehälterkörpers des Müllfahrzeugs angeordnet ist und zur Steuerung der Zylinderbewegung des oberen Kratzers dient,
das bezeichnete dritte Magnetventil aus einem Magnetventil für die Entladeplatte und einem Magnetventil für das Zurückfahren der Entladeplatte besteht, als das dritte Ventil am vorderen Türflügel des Müllbehälterkörpers des Müllfahrzeugs angeordnet ist und zur Steuerung der Zylinderbewegung des oberen Kratzers dient,
das bezeichnete vierte Magnetventil aus einem Magnetventil für das Absenken des Beladers besteht, als das vierte Ventil am vorderen Türflügel des Müllbehälterkörpers des Müllfahrzeugs angeordnet ist und zur Steuerung der Anhebeund Absenkbewegung des Beladerzylinders dient, und
das bezeichnete fünfte Magnetventil aus einem Magnetventil für die Verriegelung des Verriegelungshakens und einem Magnetventil für die Entriegelung des Verriegelungshakens besteht, als das fünfte Ventil am vorderen Türflügel des Müllbehälterkörpers des Müllfahrzeugs angeordnet ist und zur Steuerung der Zylinderbewegung des Verriegelungshakens dient;
worin das bezeichnete hintere Bedienfeld (6) am Hinterteil des Beladers angeordnet ist und einen Ladeschalter und einen Not-Aus-Schalter umfasst, die jeweils dem hinteren Bediener dazu dienen, Arbeitsanweisungen zum Beladen und den Not-Aus-Befehl an die CAN-Steuerung des Ventilblocks (10) zu senden;
wobei die bezeichnete CAN-Steuerung für Ventilblock (10) dazu dient, die Abtastdaten des Induktionsschaltermoduls und des Drucksensors (8) über den ersten CAN-Bus an die CAN-Steuerung des Fahrerhauses (13) zu übermitteln und den Betrieb des Hydraulik-Magnetventilmoduls (9) entsprechend den Steuerbefehlen der CAN-Steuerung des Fahrerhauses (13) oder des hinteren Bedienfelds (6) zu steuern; wobei die bezeichnete CAN-Steuerung des Fahrerhauses (13) dazu dient, den Betrieb der Signalleuchte für Stromversorgung und der Verriegelungshaken-Anzeige an der Bedienbox entsprechend den Abtastdaten des Induktionsschaltermoduls zu steuern, anhand der Eingangsdaten der Bedienbox (11) entsprechende Steuerbefehle an die genannte CAN-Steuerung des Ventilblocks (10) zu übermitteln und bei fehlenden Abtastdaten des Induktionsschaltermoduls, des Drucksensors (8) die Auslösung eines Alarms am bezeichneten Touchscreen (12) zu veranlassen.

2. Das genannte busgestützte Steuerungssystem für Müllfahrzeuge nach dem Anspruch 1, **dadurch gekennzeichnet, dass** das bezeichnete Induktionsschaltermodul einen oberen Endschalter (2), einen Endschalter für Umkehrung (3), einen Endschalter für Kratzbewegung (4), einen unteren Endschalter (5), einen Schalter für T/G-Absenken-Bestätigung (1) und einen Schalter für Sicherheitsbestätigung (7) umfasst, worin der bezeichnete obere Endschalter, Endschalter für Umkehrung, Endschalter für Kratzbewegung, untere Endschalter, Schalter für T/G-Absenken-Bestätigung und Schalter für Sicherheitsbestätigung alle mit dem CAN-Steuerung des Ventilblocks (10) direkt verbunden sind, wobei:
der genannte obere Endschalter (2) in der Endposition des Hubwegs des oberen Kratzers platziert ist und dazu dient, zu erfassen, ob das Anheben des oberen Kratzers zu Ende ist, und dies an die bezeichnete CAN-Steuerung des Ventilblocks (10) zu übermitteln;
der genannte Endschalter für Umkehrung (3) in der Endposition des Umkehrwegs des unteren Kratzers platziert ist und dazu dient, zu erfassen, ob die Umkehrung des unteren Kratzers zu Ende ist, und dies an die bezeichnete CAN-Steuerung des Ventilblocks (10) zu übermitteln;
der genannte Endschalter für Kratzbewegung (4) in der Endposition des Kratzwegs des unteren Kratzers platziert ist und dazu dient, zu erfassen, ob die Kratzbewegung des unteren Kratzers zu Ende ist, und dies an die bezeichnete CAN-Steuerung des Ventilblocks (10) zu übermitteln;
der genannte untere Endschalter (5) in der Endposition des Absenkwegs des oberen Kratzers platziert ist und dazu dient, zu erfassen, ob das Absenken des oberen Kratzers zu Ende ist, und dies an die bezeichnete CAN-Steuerung des Ventilblocks (10) zu übermitteln;
der genannte Schalter für T/G-Absenken-Bestätigung (1) an der Achsenverbindung zwischen dem Behälterkörper des Müllfahrzeugs und dem Belader platziert ist und dazu dient, zu erfassen, ob das Absenken des Beladers zu Ende ist, und dies an die bezeichnete CAN-Steuerung des Ventilblocks (10) zu übermitteln;
der genannte Schalter für Sicherheitsbestätigung (7) in der Position des offenen Verriegelungshakenzylinders platziert ist und dazu dient, zu erfassen, ob der induktive Verriegelungshaken offen ist, und dies an die bezeichnete CAN-Steuerung des Ventilblocks (10) zu übermitteln;
der genannte Drucksensor (8) in der Hydraulikleitung des Müllfahrzeugs eingebaut ist und dazu dient, den Druckwert des Hydrauliksystems in Echtzeit zu überwachen und an die CAN-Steuerung des Ventilblocks zu übermitteln.

3. Das genannte busgestützte Steuerungssystem für Müllfahrzeuge nach dem Anspruch 2, **dadurch gekennzeichnet, dass** ein ssca1610-Chip bei der bezeichneten CAN-Steuerung des Fahrerhauses (13) eingesetzt wird, wobei I0.0 mit dem Taster Hauptschalter Beladen, I0.1 mit dem Taster Hauptschalter Entladen verbunden ist, I0.2 mit dem Taster Belader anheben, I0.3 mit dem Taster Belader absenken, I0.4 mit dem Taster Entladeplatte ausfahren, I0.5 mit dem Taster Entladeplatte zurückfahren, I0.6 mit dem Taster Entfernen jeweils verbunden ist und O0.1 mit der Verriegelungshaken-Entriegelungsanzeige verbunden ist.

4. Das genannte busgestützte Steuerungssystem für Müllfahrzeuge nach dem Anspruch 2, **dadurch gekennzeichnet, dass** ein ssca2020-Chip bei der CAN-Steuerung des Ventilblocks (10) eingesetzt wird, wobei I1.0 mit dem Schalter für Sicherheitsbestätigung, I1.1 mit dem Schalter für T/G-Absenken-Bestätigung, I1.2 mit dem oberen Endschalter (2), I1.3 mit dem unteren Endschalter (5), I1.4 mit dem Endschalter für Kratzbewegung (4), I1.5 mit dem Endschalter für Umkehrung (3), I1.6 mit dem Not-Aus-Schalter, I1.7 mit dem Beladeschalter, O1.0 mit dem Magnetventil für die Umkehrung des unteren Kratzers, O1.1 mit dem Magnetventil für das Absenken des oberen Kratzers, O1.2 mit dem Magnetventil für die Kratzbewegung des unteren Kratzers, O1.3 mit dem Magnetventil für das Anheben des oberen Kratzers, O1.4 mit dem Magnetventil für das Absenken des Beladers, O1.5 mit dem Magnetventil für die Entladeplatte, O1.6 mit dem Magnetventil für das Zurückfahren der Entladeplatte, O1.7 mit dem Magnetventil für die Verriegelung des Verriegelungshakens, O1.8 mit dem Magnetventil für die Entriegelung des Verriegelungshakens jeweils verbunden ist.

## Revendications

1. Un système de contrôle de camion à ordures basé sur les bus, **caractérisé en ce qu'**il comprend un contrôleur CAN de la cabine (13), un réseau local (LAN) à contrôleur, un écran tactile (12), un contrôleur CAN du bloc de vannes (10), de premier à troisième bus CAN, une boîte de commande de boutons (11), un panneau de commande arrière (6), un module de commutation inductive, un capteur de pression (8) et un module d'électrovanne hydraulique;
le contrôleur CAN de la cabine (13), la boîte de commande de boutons (11), et l'écran tactile (12) susmentionnés sont tous équipés dans la cabine du camion à ordures, dont le contrôleur CAN de la cabine (13) et la boîte de commande de boutons (11) sont directement connectées;
le contrôleur CAN du bloc de vannes (10), le module de commutation inductive, le capteur de pression (8), le module d'électrovanne hydraulique (9) et le panneau de commande arrière (6) susmentionnés sont tous placés à l'extérieur de la cabine du camion à ordures, et ledit contrôleur CAN du bloc de vannes (10) est directement connecté avec le module de commutation inductive, le capteur de pression (8), le module d'électrovanne hydraulique (9) et le panneau de commande arrière (6) respectivement;
parmi eux, le contrôleur CAN de la cabine (13) et le contrôleur CAN du bloc de vannes (10) effectuent des communications CAN via le premier bus CAN;
le contrôleur CAN de la cabine (13) et l'ECU de moteur du camion à ordures effectuent des communications CAN via le deuxième bus CAN;
le contrôleur CAN de la cabine (13) et l'appareil à écran tactile (12) effectuent des communications CAN via le troisième bus CAN;
parmi eux, le premier bus CAN et le troisième bus CAN communiquent sur la base du protocole CANOpen, le deuxième bus CAN communique sur la base du protocole J1939;
ladite boîte de commande de boutons (11) comprend un voyant d'alimentation, un voyant de crochet, un bouton de charge de commutateur principal, un bouton de décharge de commutateur principal, un bouton de montée du remplisseur, un bouton de descente du remplisseur, un bouton d'éjection de la plaque de décharge, un bouton de retour de la plaque de décharge et un bouton de purge, qui sont utilisés pour afficher l'état de l'alimentation et du crochet, et pour que l'opérateur de la cabine envoient des instructions d'opération de charge/décharge au contrôleur CAN de la cabine (13);
ledit module de commutation inductive est utilisé pour détecter la position du grattoir supérieur, du grattoir inférieur et du remplisseur, détecter si le cylindre du crochet est ouvert, et détecter la valeur de pression du système hydraulique du camion à ordures;
ledit module d'électrovanne hydraulique (9) comprend de première à cinquième inter-électrovannes hydrauliques, dans lesquelles:
la première inter-électrovanne comprend une électrovanne d'inversion à grattoir inférieur et une électrovanne de raclage à grattoir inférieur, qui est disposée sur le premier range du panneau de porte avant du corps de la poubelle du camion à ordures et est utilisée pour contrôler le mouvement du cylindre de grattoir inférieur;
la deuxième inter-électrovanne comprend une électrovanne de descente à grattoir supérieur et une électrovanne de montée à grattoir supérieur, qui est disposée sur le deuxième rang du panneau de porte avant du corps de la poubelle du camion à ordures et est utilisée pour contrôler le mouvement du cylindre de grattoir supérieur;
la troisième inter-électrovanne comprend une électrovanne à plaque de décharge et une électrovanne de retour à plaque de décharge, qui est disposée sur le troisième range du panneau de porte avant du corps de la poubelle du camion à ordures et est utilisée pour contrôler le mouvement du cylindre de plaque de décharge;
la quatrième inter-électrovanne comprend une électrovanne de descente à remplisseur, qui est disposée sur le quatrième rang du panneau de porte avant du corps de la poubelle du camion à ordures et est utilisée pour contrôler le mouvement du cylindre de montée/descente du remplisseur;
la cinquième inter-électrovanne comprend une électrovanne de verrouillage à crochet et une électrovanne de déverrouillage à crochet, qui est disposée sur le cinquième range du panneau de porte avant du corps de la poubelle du camion à ordures et est utilisée pour contrôler le mouvement du cylindre de crochet;
ledit panneau de commande arrière (6) est disposé à la fin du remplisseur et contient un interrupteur de charge et un interrupteur d'arrêt d'urgence, qui sont respectivement utilisés pour que l'opérateur arrière envoie une instruction d'opération de charge et une instruction d'arrêt d'urgence au contrôleur CAN du bloc de vannes (10);
ledit contrôleur CAN du bloc de vannes (10) est utilisé pour transmettre les données d'induction du module de commutation inductive et du capteur de pression (8) au contrôleur CAN de la cabine (13) via le premier bus CAN, et contrôler le fonctionnement du module d'électrovanne hydraulique (9) selon les instructions de commande du contrôleur CAN de la cabine (13) ou du panneau de commande arrière (6);
ledit contrôleur CAN de la cabine (13) est utilisé pour contrôler le fonctionnement du voyant d'alimentation et du voyant du crochet de la boîte de commande de boutons en fonction des données d'induction du module de commutation inductive, et envoyer les instructions de commande correspondantes au contrôleur CAN du bloc de vannes (10) en fonction des données d'entrée de la boîte de commande de boutons (11), puis contrôler l'écran tactile (12) pour déclencher une alarme lorsque les données d'induction du module de commutation inductive et du capteur de pression (8) sont manquantes.

2. Selon la Revendication 1, ledit système de contrôle du camion à ordures basé sur les bus est **caractérisé en ce que** ledit module de commutation inductive comprend un commutateur à induction de limite supérieure (2), un commutateur à induction de fin d'inversion (3), et un commutateur à induction de fin de raclage (4), un commutateur à induction de limite inférieure (5), un commutateur de confirmation de descente T/G (1) et un commutateur de confirmation de sécurité (7); parmi eux, le commutateur à induction de limite supérieure, le commutateur à induction de fin d'inversion, le commutateur à induction de fin de raclage, le commutateur à induction de limite inférieure, le commutateur de confirmation de descente T/G et le commutateur de confirmation de sécurité sont tous directement connectés au contrôleur CAN du bloc de vannes (10), dans lesquels:
ledit commutateur à induction de limite supérieure (2) est disposé à la position de fin de course de la montée du grattoir supérieur, et est utilisé pour détecter si la montée du grattoir supérieur est finie, puis le transmettre au contrôleur CAN du bloc de vannes (10);
ledit commutateur à induction de fin d'inversion (3) est disposé à la position de fin de course de l'inversion du grattoir inférieur, et est utilisé pour détecter si l'inversion du grattoir inférieur est finie, puis le transmettre au contrôleur CAN du bloc de vannes (10);
ledit commutateur à induction de fin de raclage (4) est disposé à la position de fin de course du raclage du grattoir inférieur, et est utilisé pour détecter si le raclage du grattoir inférieur est fini, puis le transmettre au contrôleur CAN du bloc de vannes (10);
ledit commutateur à induction de limite inférieure (5) est disposé à la position de fin de course de la descente du grattoir supérieur, et est utilisé pour détecter si la descente du grattoir supérieur est finie, puis le transmettre au contrôleur CAN du bloc de vannes (10);
ledit commutateur de confirmation de descente T/G (1) est disposé à la jonction de l'arbre rotatif du corps de la poubelle du camion à ordures et du remplisseur, et est utilisé pour détecter si le remplisseur a fini de descendre, puis le transmettre au contrôleur CAN du bloc des vannes (10);
ledit commutateur de confirmation de sécurité (7) est disposé dans la position d'ouverture du cylindre de crochet, et est utilisé pour détecter si le crochet est ouvert, puis le transmettre au contrôleur CAN du bloc de vannes (10);
ledit capteur de pression (8) est installé sur la canalisation du système hydraulique du camion à ordures, et est utilisé pour surveiller la valeur de pression du système hydraulique en temps réel et la transmettre au contrôleur CAN du bloc de vannes.

3. Selon la Revendication 2, ledit système de contrôle du camion à ordures basé sur les bus est **caractérisé en ce que** le contrôleur CAN de la cabine (13) adopte la puce ssca1610, et I0.0 est connecté au bouton de charge du commutateur principal, I0.1 est connecté au bouton de décharge du commutateur principal, I0.2 est connecté au bouton de montée du remplisseur, I0.3 est connecté au bouton de descente du remplisseur, I0.4 est connecté au bouton d'éjection de la plaque de décharge, I0.5 est connecté au bouton de retour de la plaque de décharge, I0.6 est connecté au bouton de purge, et O0. 1 est connecté au voyant de déverrouillage du crochet.

4. Selon la Revendication 2, ledit système de contrôle du camion à ordures basé sur les bus est **caractérisé en ce que** le contrôleur CAN du bloc de vannes (10) adopte la puce ssca2020, et I1.0 est connecté au commutateur à induction de confirmation de sécurité, I1.1 est connecté au commutateur à induction de confirmation de descente T/G , I1.2 est connecté au commutateur à induction de limite supérieure (2), I1.3 est connecté au commutateur à induction de limite inférieure (5), I1.4 est connecté au commutateur à induction de fin de raclage (4), I1.5 est connecté au commutateur à induction de fin d'inversion (3), I1.6 est connecté à l'interrupteur d'arrêt d'urgence, I1.7 est connecté à l'interrupteur de charge; O1.0 est connecté à l'électrovanne d'inversion à grattoir inférieur, O1.1 est connecté à l'électrovanne de descente à grattoir supérieur, O1.2 est connecté à l'électrovanne de raclage à grattoir inférieur et O1.3 est connecté à l'électrovanne de montée à grattoir supérieur, O1.4 est connecté à l'électrovanne de descente à remplisseur, O1.5 est connecté à l'électrovanne à plaque de décharge, O1.6 est connecté à l'électrovanne de retour à plaque de décharge, O1.7 est connecté à l'électrovanne de verrouillage à crochet, et O1.8 est connecté à l'électrovanne de déverrouillage à crochet.
